(19) **Europäisches Patentamt**

**European Patent Office**

**Office européen des brevets**

(11) **EP 0 773 056 B1**

(12) **EUROPEAN PATENT SPECIFICATION**

(45) Date of publication and mention
of the grant of the patent:
**28.08.2002 Bulletin 2002/35**

(51) Int Cl.⁷: **B01D 53/94**, B01D 53/86

(21) Application number: **96117787.0**

(22) Date of filing: **06.11.1996**

(54) **Catalyst for purifying an exhaust gas from a diesel engine**

Katalysator zum Reinigen von Dieselmotorabgas

Catalysateur pour purifier le gaz d'échappement d'un moteur diesel

(84) Designated Contracting States:
**DE FR GB**

(30) Priority: **08.11.1995 JP 29007995**

(43) Date of publication of application:
**14.05.1997 Bulletin 1997/20**

(73) Proprietor: **TOYOTA JIDOSHA KABUSHIKI
KAISHA**
**Aichi-ken (JP)**

(72) Inventors:
• **Tanaka, Toshiaki**
**Toyota-shi, Aichi (JP)**
• **Shiratani, Kazuhiko**
**Toyota-shi, Aichi (JP)**
• **Araki, Yasushi**
**Toyota-shi, Aichi (JP)**

(74) Representative:
**Winter, Brandl, Fürniss, Hübner, Röss, Kaiser,
Polte Partnerschaft
Patent- und Rechtsanwaltskanzlei
Alois-Steinecker-Strasse 22
85354 Freising (DE)**

(56) References cited:
**EP-A- 0 580 389          EP-A- 0 613 714
EP-A- 0 622 107          EP-A- 0 625 633
EP-A- 0 636 770**

• DATABASE WPI Section Ch, Week 9034 Derwent
Publications Ltd., London, GB; Class H06, AN
90-257449 XP002025219 & JP 02 180 636 A
(DENKI KAGAKU KOGYO KK) , 13 July 1990
• DATABASE WPI Section Ch, Week 9006 Derwent
Publications Ltd., London, GB; Class E36, AN
90-040738 XP002025220 & JP 01 317 542 A
(TOYOTA JIDOSHA KK) , 22 December 1989

**Description**

BACKGROUND OF THE INVENTION

1. Field of the Invention

This invention relates to a catalyst comprising a support and a coat layer supporting thereon a precious metal and a transition metal oxide for purifying hydrocarbon components in an exhaust gas from a diesel engine.

2. Description of the Related Art

Detrimental substances in an exhaust gas from engines are mainly nitrogen oxides ($NO_x$), hydrocarbons (HC), carbon monoxide (CO) and particulates. Among them, the emission quantities of CO and HC are small in diesel engines because combustion is effected within an air-rich region, but the emission quantities of $NO_x$ and particulates are great. Therefore, the reduction of $NO_x$ and the particulates has been the problem with the diesel engines.

To reduce the emission of the particulates, a method employing a diesel particulate filter using a trap has been known in the past. This diesel particulate filter is also called a "wall flow monolith" and has a structure wherein cells for allowing the passage of the exhaust gas are alternately packed so that the exhaust gas is filtered through the walls of the cells and the particulates are trapped on the walls. When the particulates so trapped are deposited on the walls, the pressure loss of the filter rises, and the filter no longer functions as the filter, and must be regenerated. To regenerate the filter, the particulates are burnt by heating with a heater, etc., but the filter is superheated due to the combustion of the particulates, and breakage occurs.

A method using an open type SOF decomposition catalyst is known as a method which does not use the diesel particulate filter. Here, the term "SOF" is the abbreviation of Soluble Organic Fraction, which comprises an unburnt fuel and a mist of a lubricating oil. A catalyst supporting thereon a precious metal such as platinum in the same way as a catalyst for gasoline engines is used for this SOF decomposition catalyst, and this catalyst oxidizes and decomposes the SOF in the diesel particulates together with CO and HC. Though this SOF decomposition catalyst cannot easily reduce the soot in the particulates, this soot can be reduced to a certain extent by improving the engine combustion. Further, the SOF decomposition has the advantage that the regeneration apparatus described above is not necessary.

When this SOF decomposition catalyst is used, however, sulfur oxide ($SO_2$) contained in the exhaust gas is oxidized by, and adsorbed to, active alumina as the catalyst metal used as a coat layer for supporting the catalyst, as $SO_3$, and when the catalyst reaches a high temperature, the $SO_3$ so adsorbed is emitted. $SO_3$ is a gas at a temperature of up to about 180°C, but as soon as it is emitted from a tail pipe into the atmosphere, it absorbs nearby moisture and changes to a sulfuric acid mist. This sulfuric acid mist is measured as a particulate and eventually, the particulates cannot be reduced. When the exhaust gas is processed by using the oxidation catalyst as described above, the quantity of the particulates increases, on the contrary.

To solve the problem described above, Japanese Unexamined Patent Publication (Kokai) No. 5-57191 proposes a catalyst comprising an active alumina layer formed on a support substrate, a catalyst metal supported on this active alumina layer, a coat layer formed on the surface of the active alumina layer and a metal oxide contained on the coat layer. According to this catalyst, $SO_2$ in the exhaust gas is adsorbed to, and absorbed by, the coat layer, and does not come into contact with the catalyst metal. Therefore, the formation of $SO_3$ is restricted and the emission quantity of the particulates is restricted, as well.

In this catalyst, however, $SO_2$ is continuously absorbed by the coat layer and sooner or later the coat layer cannot absorb any more $SO_2$. In other words, there remains the problem that degradation of the catalyst performance is quick and the catalyst cannot be used for a long time.

In a method for purifying an exhaust gas from a diesel engine by treating SOF, etc., in the exhaust gas by using an oxidation catalyst, the present invention is directed to provide a method for purifying an exhaust gas, which method solves the problems described above, can keep the oxidation power of a catalyst at a high level and can restrict the formation of $SO_3$ which would otherwise result in the particulates.

SUMMARY OF THE INVENTION

According to one aspect of the present invention for solving the problem described above, there is provided a catalyst for purifying an exhaust gas from a diesel engine, which comprises a support and a coat layer supporting thereon a precious metal and a transition metal oxide for purifying hydrocarbon components in an exhaust gas from a diesel engine comprising an exhaust gas passage, wherein a sulfide of a transition metal is co-present, and which is supported with said precious metal and said transition metal oxide.

According to this invention, $SO_2$ in the diesel exhaust gas is oxidized to $SO_3$ by the precious metal and the resulting $SO_3$ is adsorbed as the sulfate by the transition metal oxide. The sulfate so adsorbed is decomposed to $SO_2$ by the thermal decomposition and is emitted into the atmosphere. Therefore, the emission quantity of the sulfate can be reduced while keeping the HC oxidation power of the precious metal. The oxidation value of the transition metal changes when it adsorbs $SO_3$ as the sulfate but is regenerated to the transition metal of the original valence after the thermal decomposition, and the catalyst can be used repeatedly.

According to an embodiment of the present invention, there is provided the catalyst containing at least one kind of element which donates an electron upon state change such that a transition metal having a high valence formed by the decomposition of the sulfate of the transition metal is transformed to the transition metal having the original valence, in co-presence with the precious metal an the transition metal. Said element donating an electron preferably is Ag, Cu, Sn, K, Zn, Na, Mn or In. In this catalyst, since at least one kind of element which donates an electron upon the change of state such that a transition metal having a high valence generated by the decomposition of the sulfate of the transition metal to the transition metal having the original valence is co-present, the transition metal can be quickly regenerated, the state of adsorbing $SO_3$ can be secured, and catalyst efficiency can be improved.

According to a further embodiment of the present invention, there is provided the catalyst using titania as a coat layer for supporting the metal as the catalyst. In this catalyst, titania is the material which does not adsorb $SO_x$, and when the support is constituted by such material not adsorbing $SO_x$, adsorption of $SO_3$ and emission of $SO_2$ can be effected by only the transition metal without the influences of the support, and $SO_x$ adsorbed by the support is not emitted as $SO_3$.

According to a further embodiment of the present invention, there is provided the catalyst using aluminate for the coat layer for supporting the metal. In this catalyst, aluminate is relatively unstable electronically, and the valence of $A\ell$ changes, so that adsorption and emission of oxygen are conducted. Accordingly, oxygen is exchanged between aluminate and the transition metal, the change of the valence of the transition metal becomes easy, the transition metal can be quickly regenerated, the state for adsorbing $SO_3$ can be secured, and catalyst efficiency can be improved.

According to a further embodiment of the present invention, there is provided a catalyst supporting thereon the precious metal and the transition metal oxide in such a manner that the proportion of the transition metal oxide becomes higher from the upstream side to the downstream side of the exhaust gas passage. In this catalyst, a greater quantity of the precious metal is disposed on the upstream side of the exhaust gas passage while a greater quantity of the transition metal oxide is disposed on the downstream side, so that $SO_3$ formed by the precious metal can be adsorbed more efficiently without being emitted, and the discharge quantity of the particulates can be reduced.

According to a further embodiment of the present invention, there is provided the catalyst wherein platinum is disposed on the upstream side on said exhaust gas passage and at least one kind of rhodium and palladium is disposed on the downstream side as a principal component, as said precious metal, and said transition metal oxide is co-present with said precious metals or co-present with said precious metal on the downstream side. In this catalyst, since rhodium and palladium have lower oxidation powers than platinum and they have a lower formation capacity for $SO_3$. Since palladium or rhodium is disposed as the principal component on the downstream side of platinum having high oxidation power, the formation of more stable $SO_3$ due to the progress of the oxidation of $SO_2$ can be restricted, and adsorption efficiency to the transition metal oxide can be improved. with the present invention it is possible to provide an apparatus for purifying an exhaust gas from a diesel engine which comprises a catalyst supporting thereon a precious metal and a transition metal oxide for purifying hydrocarbon components in an exhaust gas, and temperature elevation means for raising an exhaust gas temperature or a catalyst temperature to a temperature higher than a thermal decomposition temperature of a sulfate of the transition metal. In this apparatus for purifying an exhaust gas from the diesel engine, the temperature elevation means for promoting the thermal decomposition of the resulting sulfate of the transition metal is disposed. Accordingly, the adsorbed $SO_3$ can be emitted at a desired timing as $SO_2$.

BRIEF DESCRIPTION OF THE DRAWINGS

Fig. 1 is a schematic sectional view of a catalyst of the present invention;
Fig. 2 is a schematic view showing the structure of an apparatus for purifying an exhaust gas using a catalyst according to the present invention;
Fig. 3 is a schematic view showing the structure of a different apparatus for purifying an exhaust gas using a catalyst according to the present invention; and
Fig. 4 is a graph showing a particulate reducing effect by executing the method of the present invention.

DESCRIPTION OF THE PREFERRED EMBODIMENTS

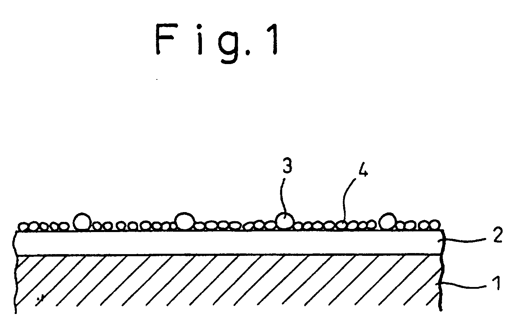

Fig. 1 shows the structure of the catalyst of the present invention. Reference numeral 1 denotes a catalyst support. This support is the same as a catalyst support for an exhaust gas purification catalyst that has been used in the past for gasoline engines, and ceramics such as cordierite, a metallic monolithic support, a foam filter, a honeycomb filter, etc., are used for the support. Reference numeral 2 denotes a coat layer for allowing the support 1 to support the catalyst, and materials having porosity and a large surface area such as alumina, silica, titania, etc., are used for the coat layer. Fig. 1 is a schematic view and shows a flat surface as the surface of the coat layer 2 for simplification. As a matter of fact, however, the coat layer has a large number of pores, and a precious metal 3 and transition metal oxide 4 are supported on the surfaces of these pores. It is possible to use, as the precious metal 3, those metals which contribute to the oxidation reaction of HC, CO and SOF and which have been used in the past, such as platinum, rhodium, palladium, etc., either alone or in combination. The support quantity of the precious metal is preferably about 0.05 to about 2g per liter of support.

The present invention is characterized in that $SO_3$ as the product of the oxidation of $SO_2$ in the exhaust gas by this precious metal 3 is adsorbed by the transition metal oxide 4 and is emitted as $SO_2$ by the subsequent thermal decomposition. In other words, $SO_3$ is adsorbed as a sulfate of the transition metal Me as expressed by the following reaction scheme:

$$MeO + SO_3 - MeSO_4$$

(where Me is a divalent transition metal).

Therefore, various transition metals can be used so long as they can form the sulfates as the transition metal. Preferred most among them is iron, because the thermal decomposition temperature of iron sulfate $FeSO_4$ formed by adsorbing $SO_3$ is the lowest.

Since the transition metal oxide has the function of adsorbing $SO_3$ formed by the precious metal, it is dispersed uniformly round the precious metal on the pore surface of the coat layer 2. The precious metal itself has the important role of oxidizing HC, CO, etc., and it must not be covered with the transition metal. Generally, the support quantity of the transition metal oxide is about 30 times the quantity of the precious metal.

The catalyst of the present invention is produced by various ordinary methods. For example, the support 1 is immersed in a coating solution containing alumina, etc., pulled out to remove the excessive solution, dried and baked and the coat layer 2 formed. Next, water-soluble precious metal and transition metal salts are selected and are dissolved in water. The support 1 having the coat layer described above is then immersed in this solution, and is dried and baked to give the catalyst.

The oxidation reaction of $SO_2$ by the precious metal is a vapor phase reaction, and the $SO_3$ formed by this reaction is a gas. Therefore, it is difficult to get the transition metal oxide adsorb to all the resulting $SO_3$. In order to get the transition metal oxide to adsorb a greater quantity of $SO_3$, it is preferred to cause an alkaline metal having high affinity with $SO_3$ be co-present with the precious metal and the transition metal oxide. The term "alkaline metal" hereby means the alkali metals, the alkaline earth metals and the rare earth metals.

The thermal decomposition temperature of the sulfates of the transition metal is generally about 550°C in the oxidizing atmosphere. The ordinary combustion temperature in the diesel engines is mainly within the range of 300 to 400°C, and the temperature of 550°C is the one that is attained under the driving state approximate to the full combustion state. Accordingly, to efficiently heat-decompose the sulfate of the transition metal adsorbing $SO_3$, it is preferred to lower its thermal decomposition temperature to the normal temperature range of the diesel engines. Since a sulfide of the transition metal is co-present, the thermal decomposition temperature of the transition metal can be lowered and the sulfates can be efficiently decomposed within the normal temperature range. The sulfates which are allowed to be co-present are preferably the sulfides of the same kind of the transition metal as that of the transition metal oxide. When FeO is used as the transition metal oxide, for example, the thermal decomposition temperature of this sulfate is about 600°C, but when iron sulfide FeS is co-present, the thermal decomposition temperature drops to about 400°C.

The sulfate of the transition metal formed by adsorbing $SO_3$ emits $SO_2$ due to the thermal decomposition, and after the emission of $SO_2$, the transition metal such as Fe attains the state of high oxidation value from $Fe^{2+}$ to $Fe^{3+}$ as expressed by the following reaction scheme:

$$FeO + SO_3 \rightarrow FeSO_4 \rightarrow Fe_2O_3 + SO_2$$

It is therefore necessary to return Fe to the original atomic valence of $Fe^{2+}$ and to provide an electron. For this purpose, it is preferred that an element which gives the electron due to the state change, that is, an element having high standard formation free energy or low ionization potential, is allowed to be co-present. Examples of such elements are Ag, Cu, Sn, K, Zn, Na, Mn, In, etc. In the case of Sn, for example, Sn and $Sn^{2+}$ change and emit the electron in accordance with the oxidation value of Fe, regenerate Fe to $Fe^{2+}$, and secure the state which adsorbs $SO_3$.

When alumina is used as the coat layer for the catalyst metal support, alumina itself reacts with $SO_2$, forms alumina sulfate $(A\ell_2(SO_4)_3)$ and emits $SO_3$. Therefore, alumina reduces the effect of adsorbing $SO_3$ and emitting $SO_2$ by the transition metal oxide. For this reason, titania which does not react $SO_2$ is preferably used for the coat layer because titania cannot assume the form of the sulfate.

Because alumina reacts with $SO_2$, it is also preferred to use an aluminate in place of alumina for the coat layer. The aluminate is the reaction product between alumina and oxides of the alkali metal, the alkaline earth metal, the transition metal or the rare earth element. Since aluminate does not react with $SO_2$, it can prevent the problem described above and can exhibit the effect of the transition metal oxide.

As described above, $SO_2$ in the exhaust gas is oxidized by the precious metal to $SO_3$, and the present

invention causes the transition metal oxide to adsorb this $SO_3$ and to emit it as $SO_2$. However, $SO_3$ formed near the exhaust gas outlet of the catalyst has little chance of coming into contact with the transition metal oxide and there is a high possibility that $SO_3$ is, as such, emitted. To prevent this problem, it is preferred to generate $SO_3$ in the vicinity of the exhaust gas inlet of the catalyst and to increase the chance of the contact with the transition metal oxide during the passage through the catalyst. This can be accomplished by disposing a gradient in the support quantities of the precious metal and the transition metal oxide from the upstream side to the downstream side of the exhaust gas passage of the catalyst. In other words, a greater quantity of the precious metal is supported on the upstream side of the catalyst so as to generate a greater quantity of $SO_3$ on the upstream side, and the quantity of the precious metal is progressively decreased toward the downstream side. To process the resulting $SO_3$, on the other hand, the quantity of the transition metal oxide is progressively increased toward the downstream side. In some cases, it is possible to employ the catalyst, wherein said precious metal and said transition metal oxide are supported at such a support ratio on said exhaust gas passage that the proportion of said transition metal oxide becomes higher from the upstream side to the downstream side of said passage.

As described above, the support quantity of the transition metal oxide is great on the downstream side of the catalyst while the support quantity of the precious metal is small or does not exist at all. Therefore, the oxidation capacity of the exhaust gas drops on the downstream side and the exhaust gas processing capacity is not sufficient in some cases. To cope with this problem, platinum is supported on the upstream side of the catalyst, and at least one of rhodium and palladium having a low formation capacity of the sulfate but having the oxidation capacity as the principal component of the precious metal is supported on the downstream side. In some cases, it is further possible to employ the catalyst, wherein platinum is disposed on the upstream side on said exhaust gas passage, at least one kind of rhodium and palladium is disposed on the downstream side as a principal component, as said precious metal, and said transition metal oxide is co-present with said precious metals or co-present with said precious metal on the downstream side.

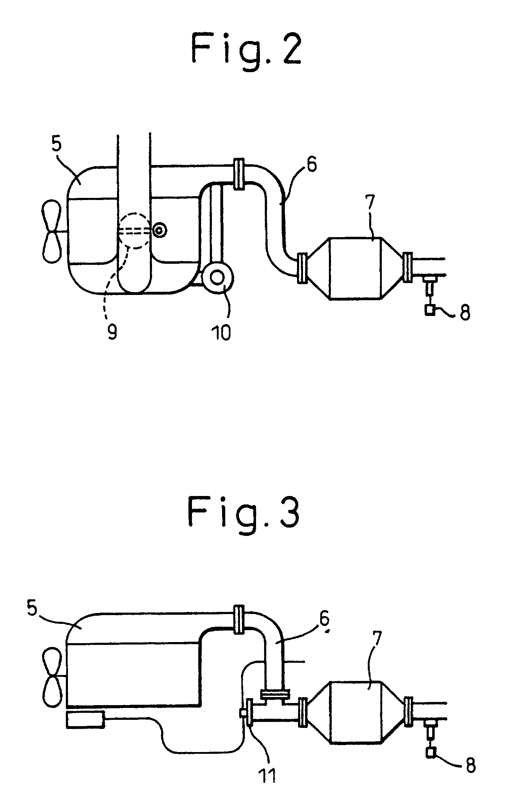

The sulfate adsorbed to the transition metal oxide is thermally decomposed and is emitted as $SO_2$, and this $SO_2$ can be emitted at a necessary timing by disposing catalyst temperature elevation means. The construction of a diesel engine exhaust gas purification apparatus equipped with such a temperature elevation means is shown in Fig. 2. In this drawing, reference numeral 5 denotes a diesel engine, reference numeral 6 denotes an exhaust pipe, reference numeral 7 denotes a catalyst, reference numeral 8 denotes an exhaust temperature sensor, reference numeral 9 denotes an intake throttle valve and reference numeral 10 denotes an EGR valve. The exhaust gas generated in the engine 5 is sent to the catalyst 7 through the exhaust gas pipe 6. In the catalyst 7, the sulfur oxide in the exhaust gas is oxidized to $SO_3$ by the precious metal as described above, and this $SO_3$ reacts with the transition metal oxide and is adsorbed as the transition metal sulfate. If the temperature of the catalyst is high, the sulfate so adsorbed is thermally decomposed and is emitted as $SO_2$. If the temperature is not high, the thermal decomposition does not proceed and the adsorption quantity increases until finally, $SO_3$ is not adsorbed and might be as such emitted. Therefore, it is preferred to promote the thermal decomposition by suitable heating and to emit $SO_3$ as $SO_2$. Therefore, the fuel injection quantity in the engine is added up, and when the sum exceeds a predetermined value, the intake throttle valve 9 and the EGR valve 10 are controlled so as to raise the exhaust gas temperature. When the intake throttle valve 9 is contracted, for example, the diesel engine in which the air-fuel mixture is normally burnt in the over-lean state approaches the stoichiometric air-fuel mixture and the exhaust gas temperature rises. After the temperature is raised above the predetermined temperature while monitoring the output of the outgoing gas exhaust gas temperature sensor 8, the temperature is retained for a sufficient time so that the adsorbed $SO_3$ can be emitted as $SO_2$. Thereafter, the operation is completed.

Fig. 3 shows the construction of another exhaust gas purification apparatus for the diesel engine. In Fig. 3, reference numerals 5 to 8 denote the engine, the exhaust pipe, the catalyst and the outgoing gas exhaust gas temperature sensor in the same way as in Fig. 2, respectively. Reference numeral 11 denotes a light oil addition device. In this apparatus, the fuel injection quantity in the engine is added up and when the sum exceeds a predetermined quantity, light oil is supplied from the light oil addition device 11 to the catalyst 7 and is burnt, thereby raising the catalyst temperature. In this case, the addition of light oil not only raises the temperature but also supplies HC to the catalyst. Therefore, when iron is used as the transition metal, for example, $Fe_2O_3$ is converted to FeO by HC after emission of $SO_2$, and adsorption of $SO_3$ becomes easier the next time.

**Claims**

1.  A catalyst comprising a support and a coat layer supporting thereon a precious metal and a transition metal oxide for purifying hydrocarbon components in an exhaust gas from a diesel engine comprising an exhaust gas passage, wherein a sulfide of a transition metal is co-present, and is supported with said precious metal and said transition metal oxide.

**2.** A catalyst according to claim 1, wherein at least one element of the group consisting of Ag, Cu, Sn, K, Zn, Na, Mn and In is co-present with said precious metal and said transition metal oxide.

**3.** A catalyst according to claims 1 or 2, wherein titania is used for said coat layer for supporting said precious metal and said transition metal oxide.

**4.** A catalyst according to any of claims 1 to 3, wherein aluminate is used for said coat layer for supporting said precious metal and said transition metal oxide.

**5.** A catalyst according to any of claims 1 to 4, wherein said precious metal and said transition metal oxide are supported at such a support ratio on said exhaust gas passage that the proportion of said transition metal oxide becomes higher from the upstream side to the downstream side of said passage.

**6.** A catalyst according to any of claims 1 to 5, wherein platinum is disposed on the upstream side on said exhaust gas passage and at least one kind of rhodium and palladium is disposed on the downstream side as a principal component, as said precious metal, and said transition metal oxide is co-present with said precious metals or co-present with said precious metal on the downstream side.

**Patentansprüche**

**1.** Ein Katalysator, welcher einen Träger und eine Überzugsschicht umfasst, die ein Edelmetall und ein Übergangsmetalloxid trägt, zur Reinigung von Kohlenwasserstoffkomponenten in Abgasen von einem Dieselmotor mit einer Abgaspassage, wobei ebenfalls ein Sufid eines Übergangsmetalles vorliegt, das von dem Edelmetall und dem Übergangsmetall getragen wird.

**2.** Ein Katalysator nach Anspruch 1, wobei wenigstens ein Element der Gruppe : Ag, Cu, Sn, K, Zn, Na, Mn, und In neben dem Edelmetall und dem Übergangsmetalloxid anwesend ist.

**3.** Ein Katalysator nach Anspruch 1 oder 2, wobei Titan für die Überzugsschicht, die das Edelmetall und das Übergangsmetalloxid trägt, verwendet wird.

**4.** Ein Katalysator nach einem der Ansprüche 1 bis 3, wobei Aluminat für die Überzugsschicht, die das Edelmetall und das Übergangsmetalloxid trägt, verwendet wird.

**5.** Ein Katalysator nach einem der Ansprüche 1 bis 4, wobei das Edelmetall und das Übergangsmetalloxid bei einem Trägerverhältnis in der Abgaspassage getragen wir, bei dem der Anteil des Übergangsmetalloxids im Einströmbereich gegenüber dem Ausströmbereich der Passage höher ist.

**6.** Ein Katalysator nach einem der Ansprüche 1 bis 5, wobei als Edelmetall in dem Einströmbereich der Abgaspassage Platin angeordnet ist, und in dem Ausströmbereich Rhodium und/oder Palladium als Hauptkomponente angeordnet sind, und das Übergangsmetalloxid neben den Edelmetallen bzw neben dem Edelmetall in dem Ausströmbereich anwesend ist.

**Revendications**

**1.** Catalyseur comprenant un support et une couche de revêtement supportant sur celle-ci un métal précieux et un oxyde de métal de transition pour épurer les composés hydrocarbures dans les gaz d'échappement d'un moteur diesel comprenant un passage des gaz d'échappement, dans lequel un sulfure d'un métal de transition est co-présent et est supporté avec ledit métal précieux et ledit oxyde de métal de transition.

**2.** Catalyseur selon la revendication 1, dans lequel au moins un élément du groupe constitué de Ag, Cu, Sn, K, Zn, Na, Mn et In est co-présent avec ledit métal précieux et ledit oxyde de métal de transition.

**3.** Catalyseur selon les revendications 1 ou 2, dans lequel le titane est utilisé par ladite couche de revêtement pour supporter ledit métal précieux et ledit oxyde de métal de transition.

**4.** Catalyseur selon l'une quelconque des revendications 1 à 3, dans lequel de l'oxyde d'aluminium est utilisé par ladite couche de revêtement pour supporter ledit métal précieux et ledit oxyde de métal de transition.

**5.** Catalyseur selon l'une quelconque des revendications 1 à 4, dans lequel ledit métal précieux et ledit oxyde de métal de transition sont supportés à un rapport de support tel sur le passage des gaz d'échappement que la proportion dudit oxyde de métal de transition devient plus élevée depuis le côté amont au côté aval dudit passage.

**6.** Catalyseur selon l'une quelconque des revendications 1 à 5, dans lequel du platine est disposé sur le côté amont sur ledit passage des gaz d'échappement au moins un type du rhodium et du palladium est disposé sur le côté aval comme composant principal, comme ledit métal précieux et ledit oxyde de métal de transition est co-présent avec lesdits métaux précieux ou co-présent avec ledit métal précieux sur le côté aval.

# Fig.1

# Fig. 2

# Fig. 3